(19) Europäisches Patentamt
European Patent Office
Office européen des brevets

(11) Publication number: **0 236 611 B1**

(12) **EUROPEAN PATENT SPECIFICATION**

(45) Date of publication of patent specification: 25.09.91    (51) Int. Cl.⁵: **B25J 19/02, B25J 13/08**

(21) Application number: 86301866.9

(22) Date of filing: 14.03.86

(54) **A robot hand.**

(43) Date of publication of application:
16.09.87 Bulletin 87/38

(45) Publication of the grant of the patent:
25.09.91 Bulletin 91/39

(84) Designated Contracting States:
**DE FR GB**

(56) References cited:
EP-A- 0 067 880    EP-A- 0 086 669
EP-A- 0 121 413    EP-A- 0 171 303
WO-A-84/04723    DE-A- 3 242 256

ROBOTICS TODAY, Fall 1981, pages 31,32;
K.R. WILSON: "Fiber optics: Practical vision
for the robot"

ELECTRONIQUE INDUSTRIELLE, no. 13, 1st
April 1981, new serie, pages 77-79, Paris, FR;
R. FONTENAY: "Robotique: le doigt opto-
électronique"

PATENTS ABSTRACTS OF JAPAN, vol. 2, no.
129, 27th October 1978, page 7814 E 78; &
JP-A-53 96 648 (KOGYO GIJUTSUIN)
24-08-1978

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Hashimoto, Hideaki c/o Patent Di-**
**vision**
**Toshiba Corporation Principal Office**
**1-1, Shibaura 1-chome Minato-ku Tokyo(JP)**

(74) Representative: **Kirk, Geoffrey Thomas et al**
**BATCHELLOR, KIRK & CO. 2 Pear Tree Court**
**Farringdon Road**
**London EC1R 0DS(GB)**

## Description

This invention relates to a robot hand for grasping an object.

Industrial robot hands or manipulators are being extensively introduced into various industrial fields for labour saving purposes. In particular, robot hands which can grasp objects and transfer them to a predetermined position are important.

However, since most robot hands have no judgement, it is difficult for them to take an action which can be executed very easily by a human operator. For example, if an object is not located in a predetermined position, it is difficult for conventional robot hands to grasp the object. Conventional robot hands cannot find the object without using a complicated and highly costly system as visual recognition information processing system.

A robot hand is disclosed in US-A-3952880. The hand is mounted at the distal end of a robot arm and is provided with two fingers which are driven by driving mechanisms towards and away from each other. A plurality of touch sensors are mounted on the inside surface of each finger. If the robot hand needs to know that an object is positioned between the fingers, and to know the distance between the fingers and the object, many touch sensors must be provided. Consequently, due to spatial considerations, a small size robot hand cannot be manufactured and, furthermore, the need for a multiplicity of lead wires for leading input and output signals from the touch sensors make the arrangement very complicated.

In EP-A-1 71 303, a robot hand is disclosed having two displaceable fingers for gripping an object. These fingers each have light emitting elements and light sensing elements, but the elements do not indicate the distance to an object placed between the fingers.

An object of the present invention is to provide a robot hand having a pair of gripping fingers which not only can detect the presence of an object between the fingers but can also determine the location of the object relative to the fingers.

According to the present invention, a robot hand mounted at the distal end of an arm movable in a plurality of directions has a pair of fingers which are displaceable towards and away from each other and each finger has a a surface facing the other finger, said surfaces serving to engage an object placed between them when the fingers are moved towards each other to grasp the object and each finger has a light emitting element and a photosensing element associated with it and means for controlling the movement of the hand in response to the output of said photosensing elements, characterised in that each of said surfaces has a unit comprising an element for emitting a beam of light in the direction towards the other surface and a photosensing element for receiving a beam of light from the direction of the other surface, the light emitting element on each surface being optically aligned with the photosensing element of the other surface whereby, in the absence of an object between the fingers, light emitted by each element is received by the photosensing element of the other finger and, with the presence of an object between the fingers, light emitted by each element is received by the photosensing element of the same finger after reflection by the object.

In order that the invention may be more readily understood, it will now be described, by way of example only, with reference to the accompanying drawings, in which:-

Figure 1 schematically illustrates a multijoint type robot system;

Figure 2 is a perspective view of an approach sensor;

Figure 3 shows characteristic curves of phototransistor (sensor) output against a distance (L) between a sensor surface and an object surface;

Figure 4 is a side view of a hand in accordance with the present invention;

Figures 5, 6 and 7 are diagrammatic plan views explaining operation of approach sensors on the robot hand;

Figures 8 and 9 are block diagrams of control means for a hand according to the present invention;

Figure 10 is a block diagram of an alternative control circuit; and

Figures 11a and 11b are timing charts of the circuit shown in Figure 10.

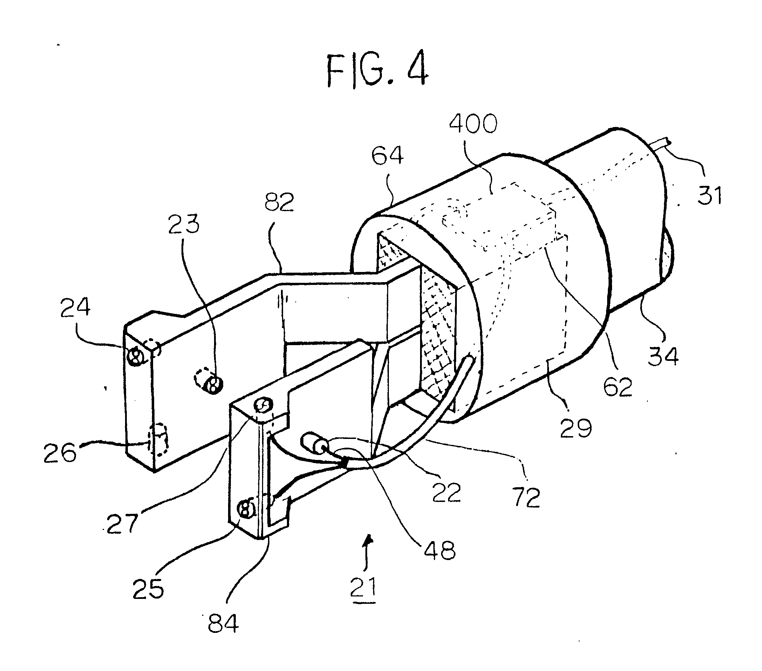

A robot 20 is provided with arm driving mechanisms 30, 32 for moving jointed arms 34, 36. A robot hand 21 is mounted at one end of arm 34. The hand has a pair of fingers and a finger driving mechanism 29 for opening and closing the fingers. Robot hand 21 has six optical sensors 22, 23, 24, 25, 26 and 27 (sensors 25, 26 and 27 are shown in Figure 4). The robot hand 21 is capable of gripping an object 28, such as a working tool or workpiece.

Robot 20 having the robot hand 21 is controlled by a robot driving controller 300 which employs a computer. For the termination and initiation of the robot motion, a store of position and sequence data are performed to position the manipulator at a predetermined position.

Sensors 22 to 27 are connected with the robot driving controller 300 through a sensor circuit 400 which is attached on robot hand 21 and by a lead cable 31 arranged to keep parallel with arms 34, 36.

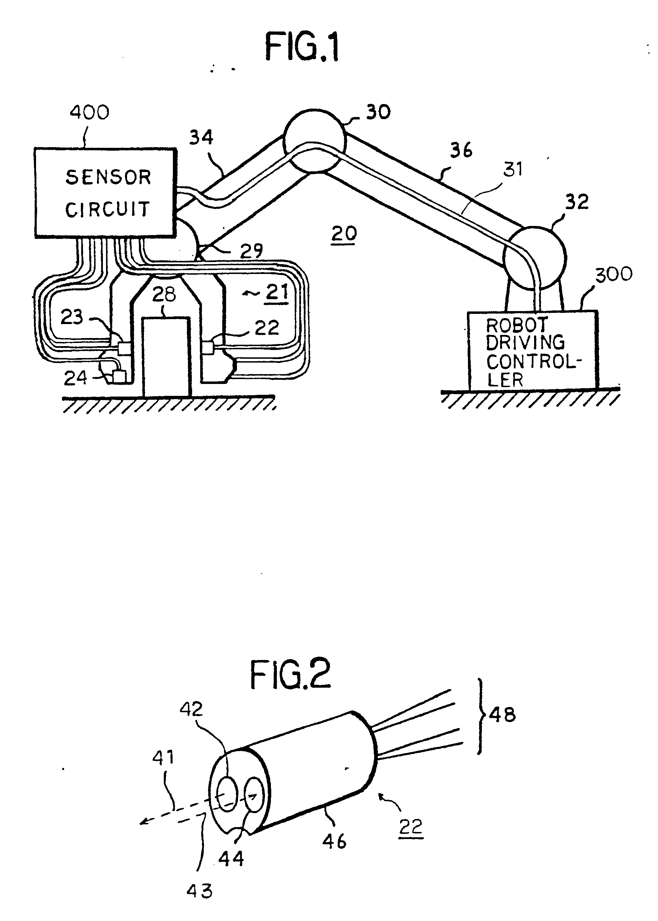

Each optical sensor, such as sensor 22, as shown in Figure 2, comprises a light-emitting diode (LED) 42 and a phototransistor 44 in a shell 46 and disposed to act in the same direction. Electrical conductive lead wires for carrying electric signals are indicated by reference 48. Light-emitting diode (LED) 42 emits a light beam 41 when energised. Phototransistor 44 outputs a signal when it is activated to receive a light beam 41. The other sensors 23 to 27 have the same construction and characteristics as sensor 22.

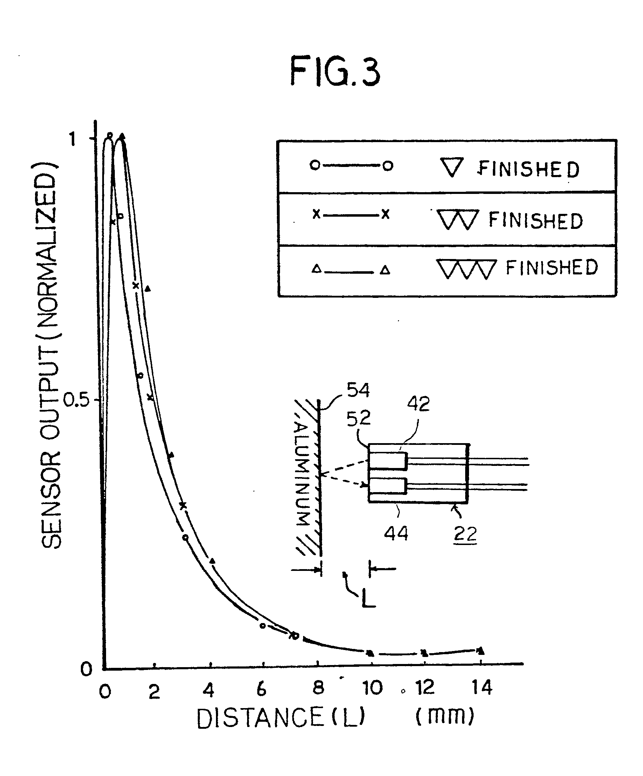

As shown in Figure 3, optical sensor 22 has a characteristic dependent on the distance (L) between a surface 52 of the sensor 22 and an object in the form of a surface 54. The circle marked line indicates the characteristic for a "rough finished aluminium surface" (identified as "V" finished), the cross marked line is the characteristic for an "intermediate finished surface" (identified as "VV finished"), and the triangle marked line is the characteristic for a "precision finished surface" (identified as "VVV finished").

According to the characteristics, as shown in Figure 3, the distance (L) at which the sensor output is a maximum is in the region of 0.5 to 1 millimetre and, when the distance is up to 1 mm, the relation is a one-value function. Then the value cf distance (L) can be detected by the level of the sensor output signal.

Referring to Figure 4, robot hand 21 includes two fingers 82, 84 attached to the free end thereof. Fingers 82, 84 are guided so as to approach or separate from each other to permit a workpiece (object 28) to be gripped or released. Three optical sensors 23, 24 and 26 are disposed on finger 82 and three optical sensors 22, 25 and 27 are disposed on finger 84. Optical sensors 24 25 are disposed on the outer end portion of fingers 82, 84, respectively. Optical sensors 26, 27 are disposed on the side surface portions of fingers 82, 84, respectively. Optical sensors 22, 23 are located in a recess in a surface of finger 84, 82, respectively, which faces the other finger. Finger driving device 29, sensor circuit 400 and a battery 62 for energising the sensor circuit operation are enveloped in a casing 64. Sensor circuit 400 is connected to the sensors by cables 72 and is provided with a lead cable 31.

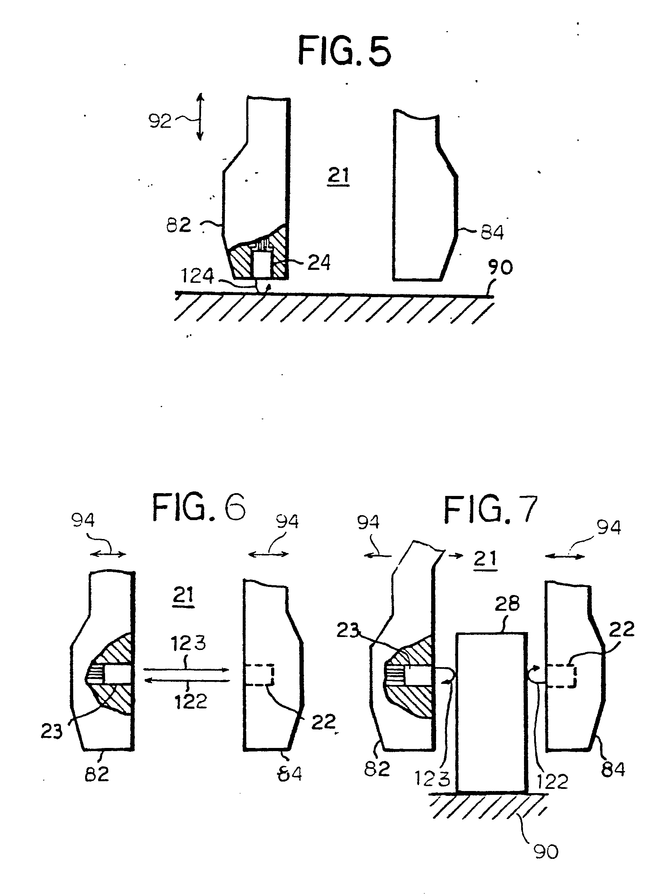

The operation of the optical sensors will be described with reference to Figures 5 to 7. Referring first to Figure 5, robot hand 21 is shown bringing fingers 82, 84 close to base 90. Sensor 24 is disposed on the outer surface at the top of finger 82. Sensor 24 receives light beam 124 which is reflected on the surface of base 90 and sensor 24 obtains a signal which is used for controlling the robot, such as a stop signal, a slowing command signal and a distance control signal.

When robot hand 21 is moved downwardly in a direction 92 towards base 90, proximity of the end of the finger and the surface of base 90 is detected by sensor 24. Then, collision of the finger against base 90 can be avoided. Other sensors 25, 26 and 27 have characteristics of the same function as sensor 24.

The grasping action of hand 21 is shown in Figures 6 and 7. The sensors 22, 23 confirm whether the object is or is not between the fingers, and detects the distance between the object and the fingers. The LED of each of the sensors 22, 23 emits a light beam 122, 123 which is received on the phototransistor of the other sensor 22, 23. In the absence of object 28, beams 122, 123 travel in straight lines, as shown in Figure 6, and, in the presence of an object 28, each beam 122. 123 is reflected at the surface of the object 28, as shown in Figure 7, and returns to the sensor from which it was directed. Then, the obtained data of the existence of the object and the measured distance are used to suitably control the robot operations, such as control speed for moving the robot arm or stopping motion thereof.

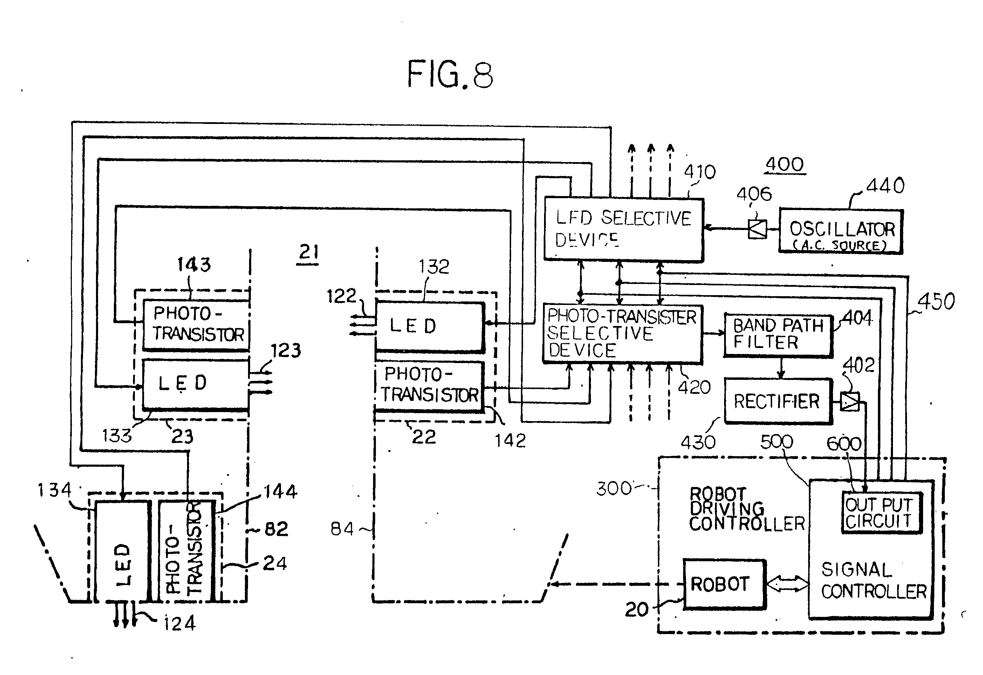

An embodiment of the sensor circuit is shown in Figure 8. A sensor circuit 400 comprises a LED selective device 410, a phototransistor selective device 420, a band path filter 404, a rectifier 430, an oscillator (A.C. source) 440, and amplifiers 402, 406. LED selective device 410 operates for sequentially selecting the LED of the six sensors 22 to 27 to connect an output signal from oscillator source 440. Phototransistor selective device 420 operates for sequentially selecting six phototransistors 142, 143, 144, ... of sensors 22 to 27. LED selective device 410 and phototransistor selective device 420 are activated by a multiplexer which is a conventional device with 8 bits operation which is switched by selective command signal generated from signal controller 500.

A signal which is amplified by amplifier 406 is applied from oscillator 440 to LED selective device 410 and is distributed to each LED 132, 133, 134, ... . Signals from phototransistor selective device 420 are applied to rectifier 430 through band path filter 404. The output signal which is obtained at rectifier 430 is amplified to suitable signal level by amplifier 402 and is inputted to output robot driving controller 600 which includes a signal controller 500.

TABLE 1

| | | selective command signal mode | | | | | | | |
|---|---|---|---|---|---|---|---|---|---|
| | | 1 | 2 | 3 | 4 | 5 | 6 | 7 | 8 |
| sensor 22 | LED 132 | O | O | X | X | X | X | X | X |
| | P-Tr 142 | X | O | O | X | X | X | X | X |
| sensor 23 | LED 133 | X | X | O | O | X | X | X | X |
| | P-Tr 143 | O | X | X | O | X | X | X | X |
| sensor 24 | LED 134 | X | X | X | X | O | X | X | X |
| | P-Tr 144 | X | X | X | X | O | X | X | X |
| sensor 25 | LED 135 | X | X | X | X | X | O | X | X |
| | P-Tr 145 | X | X | X | X | X | O | X | X |
| sensor 26 | LED 136 | X | X | X | X | X | X | O | X |
| | P-Tr 146 | X | X | X | X | X | X | O | X |
| sensor 27 | LED 137 | X | X | X | X | X | X | X | O |
| | P-Tr 147 | X | X | X | X | X | X | X | O |
| "O" indicates a selected device and "X" indicates a non-selected device. | | | | | | | | | |

A function of the circuit of Figure 8 is described as follows:-

First of all, it is described in the case of confirming the existence or non-existence of the object between fingers 82, 84. Three selective command signals are generated at signal controller 500. When LED selective device 410 and phototransistor selective device 420 select command signal mode "1", LED 132 and phototransistors 143 are selected.

LED 132 connected to A.C. source 440 emits a light beam 122. If the object is not present between fingers 82, 84, light beam 122 is received on phototransistor 143 and, if the object is present between fingers 82, 84, the light beam 122 is cut by the object and is not received upon phototransistor 143. To confirm the existence or non-existence of the object 28, it is necessary to check the output of the phototransistor 143.

In the next operation, when selective command modes 2 and 4 are selected, the distance between the object 28 and the LEDs is detected because LED 132 and 133 is selected by LED selective device 410 and phototransistor 142, 143 is selected by phototransistor selective device 420 sequentially. Then an output signal obtained from each Phototransistor, corresponding to the reflected light falling upon it, is detected as a distance signal level and is inputted to output circuit 600 through band path filter 404, rectifier 430 and amplifier 402.

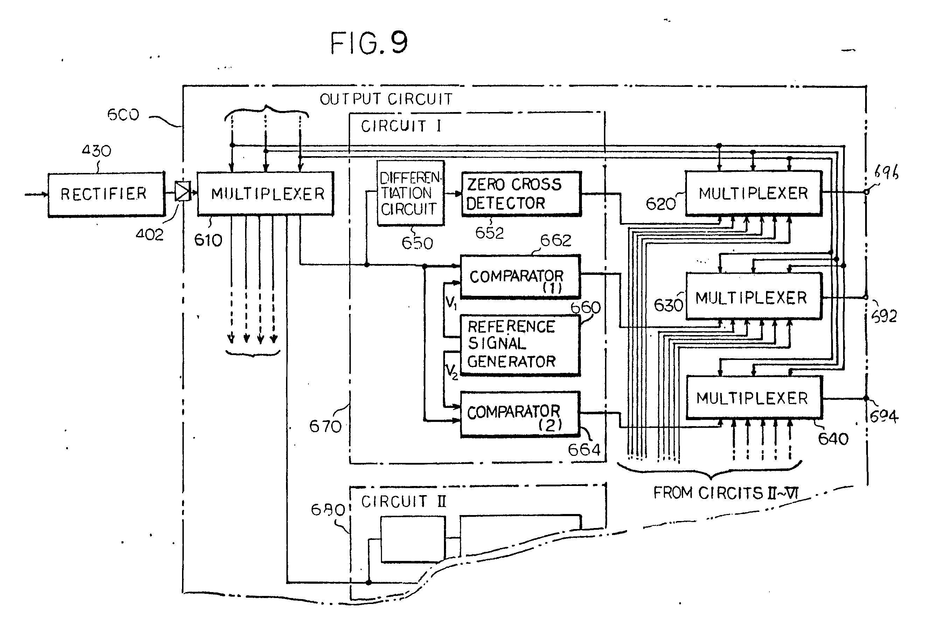

An output circuit 600 is constructed with four multiplexers 610, 620, 630 and 640, a differentiation circuit 650, a zero-cross detector 652, two comparators 662, 664 and reference signal generator 660, as shown in Figure 9.

Reference voltage generator 660 generates two reference voltages V1 and V2 with different values. Reference voltages V1 and V2 are compared at comparators 662, 664, respectively, with the output from multiplexer 610 and generate output signals 692, 694 which correspond to the distance between a face of finger 21 and a face of base 90. When the output signal 692 generated by comparator 662 is inputted to robot driving controller 300, robot 20 operates to come from very high speed to slow speed action. When controller 300 receives output signal 694 from comparator 664, (the comparing voltage is set V1 V2), the robot is stopped.

A high accuracy stop signal of the robot can be obtained from a circuit which is constructed in the form of a differentiation circuit 650 and a zero-cross detector 652. This circuit is operated when finger 21 approaches base 90 (object) and robot stop signal 696 is detected. The output value of the phototransistor has a peak value, as shown in Figure 3. The peak value is detected from this circuit as zero-cross point. The zero-cross point signal can be used to stop the robot at a desirable constant distance from the object irrespective of the surface condition of the object (base 90). The robot 20 is controlled by output signals 692, 694 and 696. For example, if signals 692, 694 and 696 are obtained, robot 20 is driven to slow motion or sudden stop. The robot 20 is minutely doing for the desirable distance or until contact to base 90 (object).

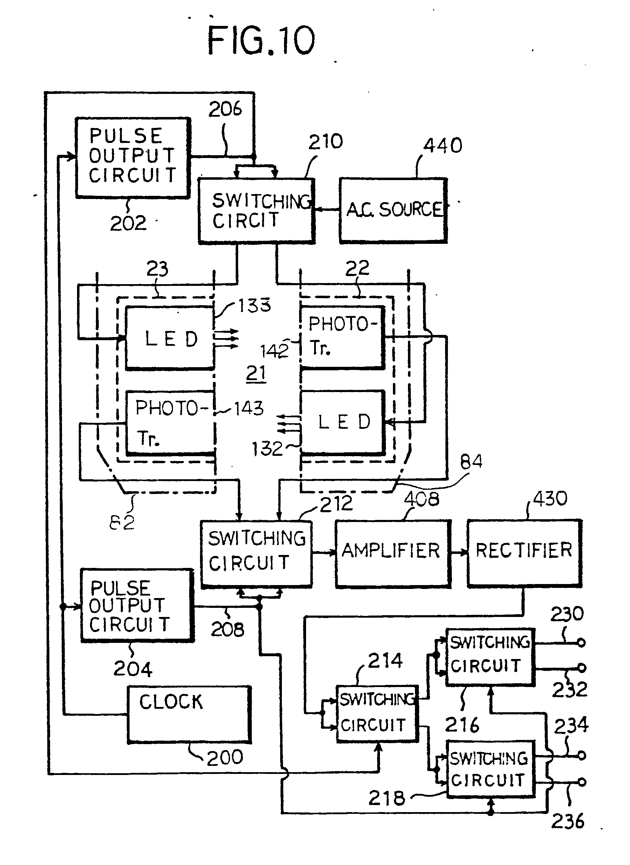

Another circuit is shown in Figure 10 which only shows sensors 22 and 23. This is a very simple circuit using a clock synchronised system which is constructed with a clock circuit 200 for generating clock pulses, two pulse output circuits 202, 204 for obtaining desirable pulse output signal 206, 208, two switch circuits 210, 212 for switching sensors 22 and 23, an amplifier 408, a rectifier 430 and three switch circuits 214, 216, 218.

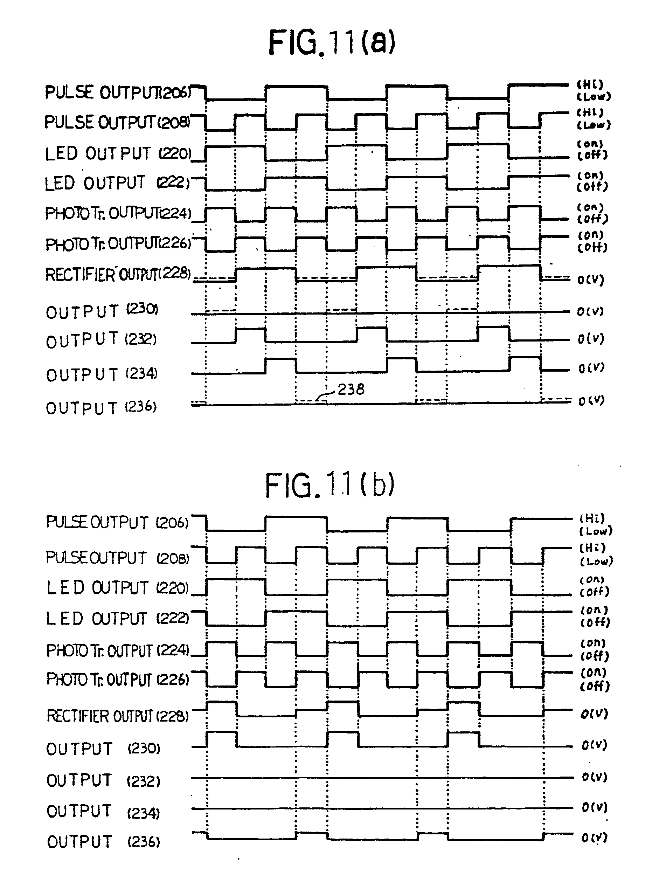

A timing chart showing each signal in this circuit is shown in Figures 11a and 11b. The timing rate of pulse output signal 206 obtained from the pulse output circuit 202 is twice the timing rate of output signal 208 obtained from pulse output circuit 204. LEDs 132, 133 are energised by signals 220, 222, respectively, obtained from switch circuit 210. On the other hand, phototransistors 142, 143 are, respectively, switched by signals 224, 226 obtained from switch circuit 212. One of signal 224 or signal 226 switched from switch circuit 212 outputs a rectifier output signal 228 through amplifier 408 and rectifier 430. Signal 228 inputs to switch circuit 214 which is operated by a signal from switch circuit 210. The output signal from switch circuit 214 inputs to both switch circuit 216 and 218 which are operated by the switch circuit 212. So, the switch circuit 216, 218 are switched output signals 230, 232, 234 and 236, respectively, as shown in Figures 11a and 11b. A dotted line in Figure 11a shows when the object is absent, that is, shows a signal received on phototransistors 142, 143 from a light beam from the opposite finger. This signal 238 is very small and can be disregarded. In Figure 11b, signal 228 obtained from rectifier 430 has a stepped level 240 which shows that object 28 is not at the centre between fingers 82, 84 but is asymmetrically positioned. In these embodiments, the source is an alternating current for emitting a light beam, but a direct source can also be used.

The phototransistor used in these embodiments could be a photodiode.

## Claims

1. A robot hand (21) mounted at the distal end of an arm movable in a plurality of directions, said hand having a pair of fingers (82, 84) which are displaceable towards and away from each other and each finger having a a surface facing the other finger, said surfaces serving to engage an object (28) placed between them when the fingers are moved towards each other to grasp the object and each finger having a light emitting element (42) and a photosensing element (44) associated with it and means (300, 400) for controlling the movement of the hand in response to the output of said photosensing elements (22, 23), characterised in that each of said surfaces has a unit (22, 23) comprising an element (42) for emitting a beam of light in the direction towards the other surface and a photosensing element (44) for receiving a beam of light from the direction of the other surface, the light emitting element on each surface being optically aligned with the photosensing element of the other surface whereby, in the absence of an object between the fingers, light emitted by each element is received by the photosensing element of the other finger and, with the presence of an object between the fingers, light emitted by each element is received by the photosensing element of the same finger after reflection by the object.

2. A robot hand as claimed in claim 1, characterised in that the means for controlling the movement of the hand includes a controller (400) having means (410) for selectively energising the light emitting elements from a source and means (420) for selectively activating the photosensing elements.

3. A robot hand as claimed in claim 2, characterised in that the controller (400) is disposed in a casing (64) with the means (29) for displacing the fingers (82, 84).

## Revendications

1. Main de robot (21) montée à l'extrémité libre d'un bras pouvant se mouvoir dans un certain nombre de directions possède une paire de doigts (82, 84) qui peuvent s'approcher et s'éloigner l'un de l'autre et dont chacun présente une surface en regard de l'autre doigts lesdites surfaces servant à venir au contact d'un objet (28) placé entre elles quand les doigts se déplacent l'un de vers l'autre afin de saisir l'objet, chaque doigt possèdant un élément émettant de la lumière (42) et un élément photosensible (44) associé à celui-ci, et des moyens (300, 400) pour commander le mouvement de la main en réponse aux signaux de sortie desdits éléments photosensibles (22, 23) caractérisée en ce que chacune desdites surfaces possède un ensemble (22, 23) comprenant un élément (42) pour émettre un faisceau de lumière en direction de l'autre surface, et un élément photosensible (44) pour recevoir un faisceau de lumière de la direction de l'autre surface, l'élément qui émet de la lumière de chacune des surfaces étant aligné optiquement avec l'élément photosensible de l'autre surface, ce qui fait que, en l'absence d'un objet entre les doigts, la lumière émise par chaque élément est reçue par l'élément photosensible de l'autre doigt, tandis que quand un objet est présent entre les doigts, la lumière émise par chaque élément est reçue par l'élément photosensible du même doigt après avoir été réfléchie par l'objet.

2. Main de robot selon la revendication 1, caractérisée en ce que les moyens qui commandent le mouvement de la main comprennent un dispositif (400) possédant des moyens (410) pour activer sélectivement les éléments émettant de la lumière à partir d'une source et des moyens (420) pour activer sélectivement les éléments photosensibles.

3. Main de robot selon la revendication 2, caractérisée en ce que le dispositif de commande (400) est logé dans un boîtier ou dans un carter (64) avec les moyens (29) qui déplacent les doigts (82, 84).

**Patentansprüche**

1. Roboterhand (21), die am Ende eines Arms angebracht ist, welcher in einer Anzahl von Richtungen bewegbar ist, wobei die Hand ein Fingerpaar (82, 84) besitzt, die aufeinander zu und voneinander weg bewegbar sind, und wobei jeder Finger eine Oberfläche hat, die dem anderen Finger gegenüberliegt, wobei die Oberfläche dazu dient, ein sich zwischen ihnen befindliches Objekt (28) festzuhalten, wenn die Finger aufeinander zubewegt werden, um das Object zu ergreifen, wobei jeder der Finger ein lichtaussendendes Element (42) und einen damit verbundenen Photosensor (44) und Vorrichtungen (300, 400) zur Steuerung der Bewegung der Hand in Reaktion auf die Ausgabe des Photosensors (22, 23) hat, **dadurch gekennzeichnet,** daß jede der Oberflächen eine Einheit (22, 23) hat, die aus einem Element (42) zur Aussendung eines Lichtstrahls in Richtung auf die andere Oberfläche und einem Photosensor (44) für das Empfangen eines Lichtstrahls aus Richtung der anderen Oberfläche besteht, wobei das lichtaussendende Element auf jeder Oberfläche optisch mit dem Photosensor der anderen Oberfläche ausgerichtet ist, wobei in Abwesenheit eines Objekts zwischen den Fingern ausgesandtes Licht von jedem Element durch den Photosensor des anderen Fingers empfangen wird, bei Vorhandensein eines Objekts zwischen den Fingern von jedem Element ausgesandtes Licht von dem Photosensor des gleichen Fingers nach Reflexion durch das Objekt empfangen wird.

2. Roboterhand nach Anspruch 1, **dadurch gekennzeichnet,** daß die Vorrichtung zur Steuerung der Hand aus einer Steuervorrichtung (400) besteht, die eine Einrichtung (410), die den lichtaussendenden Elementen von einer Quelle selektiv Energie zuführt und eine Einrichtung (420) zur selektiven Aktivierung des Photosensors aufweist.

3. Roboterhand nach Anspruch 2, **dadurch gekennzeichnet,** daß sich die Steuervorrichtung (400) in einem Behältnis (64) mit einer Einrichtung (29) zum Bewegen der Finger (82, 84) befindet.

# FIG.1

# FIG.2

FIG.3

FIG. 4

# FIG.5

# FIG.6   FIG.7

# FIG.8

EP 0 236 611 B1

# FIG. 9

EP 0 236 611 B1

# FIG.10

# FIG. 11(a)

| | |
|---|---|
| PULSE OUTPUT(206) | (HI) (Low) |
| PULSE OUTPUT(208) | (HI) (Low) |
| LED OUTPUT (220) | (on) (off) |
| LED OUTPUT (222) | (on) (off) |
| PHOTO Tr. OUTPUT(224) | (on) (off) |
| PHOTO Tr. OUTPUT(226) | (on) (off) |
| RECTIFIER OUTPUT(228) | 0(V) |
| OUTPUT (230) | 0(v) |
| OUTPUT (232) | 0(v) |
| OUTPUT (234) | 0(V) |
| OUTPUT (236) | 0(V) |

238

# FIG. 11(b)

| | |
|---|---|
| PULSE OUTPUT (206) | (Hi) (Low) |
| PULSE OUTPUT (208) | (Hi) (Low) |
| LED OUTPUT (220) | (on) (off) |
| LED OUTPUT (222) | (on) (off) |
| PHOTO Tr. OUTPUT (224) | (on) (off) |
| PHOTO Tr. OUTPUT (226) | (on) (off) |
| RECTIFIER OUTPUT (228) | 0(V) |
| OUTPUT (230) | 0(v) |
| OUTPUT (232) | 0(v) |
| OUTPUT (234) | 0(v) |
| OUTPUT (236) | 0(V) |